# EUROPÄISCHE PATENTSCHRIFT

(11) **EP 1 376 084 B1**
(45) Veröffentlichungstag und Bekanntmachung des Hinweises auf die Patenterteilung: **30.05.2007**
(21) Anmeldenummer: 03013634.5
(22) Anmeldetag: 16.06.2003
(51) Int. Cl.: G01K 17/06, G01K 17/12

(54) **Verfahren zur Ermittlung eines Bewertungsfaktors eines Heizgerätes, Heizkostenverteiler für die Durchführung des Verfahrens sowie Heizgerät mit einem derartigen Heizkostenverteiler**
Method for determining a parameter of a heater, heating cost distributor for carrying out said method, and heater with such a distributor
Méthode pour la détermination d'un paramètre d'un appareil de chauffage, distributeur de frais de chauffage pour sa mise en oeuvre, et appareil de chauffage équipé d'un tel distributeur

(30) Priorität: 17.06.2002 DE 10227024
(43) Veröffentlichungstag der Anmeldung: 02.01.2004
(73) Patentinhaber: Olsberg Hermann Everken GmbH, 59939 Olsberg (DE)
(72) Erfinder: Schulte, Volker, Dr.-Ing., 59939 Olsberg (DE)
(74) Vertreter: Basfeld, Rainer

(56) Entgegenhaltungen:
- US-A- 4 049 044

## Beschreibung

Die vorliegende Erfindung betrifft ein Verfahren zur Ermittlung eines Bewertungsfaktors eines Heizgerätes gemäß dem Oberbegriff des Anspruchs 1, einen Heizkostenverteiler gemäß dem Oberbegriff des Anspruchs 5 sowie ein Heizgerät gemäß dem Oberbegriff des Anspruchs 8.

Ein Verfahren zur Ermittlung eines Bewertungsfaktors eines Heizgerätes sowie ein Heizkostenverteiler der vorgenannten Art sind aus der US-A-4 049 044 bekannt. Das mit dem darin beschriebenen Heizkostenverteiler versehene Heizgerät umfasst eine Heizeinheit sowie in jeder zu heizenden Einheit mindestens einen Thermostaten sowie jeweils einen Zuluftventilator für die Zuführung warmer Luft aus der Heizeinheit zu der zu heizenden Einheit. Das in der US-A-4 049 044 beschriebene Verfahren sieht vor, dass aus dem Zustand des Thermostats und der Geschwindigkeit des Zuluftventilators die der zu heizenden Einheit zugeführte Wärmemenge in Relation zu der gesamten, sämtlichen Einheiten zugeführten Wärmemenge ermittelt wird.

Neubauten, die gemäß der seit Februar 2002 in Deutschland in Kraft gesetzten Energieeinsparverordnung (EnEV) aufgebaut werden, müssen sehr gut isoliert und sehr dicht ausgeführt werden. Es ist zu erwarten, dass auch für Altbausanierungen zukünftig eine ähnliche EnEV erstellt und in Kraft gesetzt wird. Eine Lüftung über offene Fenster ist in diesen Gebäuden aus Gründen des hohen Wärmeverlustes beim Lüften nicht erwünscht. In diesen Bauten kann daher auf eine geregelte Lüftung praktisch nicht mehr verzichtet werden, um einer Schimmelbildung vorzubeugen und damit ein gesundes Raumklima zu schaffen. Um den gemäß EnEV geforderten geringen Wärmebedarf einhalten zu können, muss die Lüftung in der Regel über ein Wärmerückgewinnungssystem verfügen.

Am Markt konkurrieren zentrale Lüftung und dezentrale Lüftungssysteme. Insbesondere für Nachrüstungen und Sanierungen eignen sich dezentrale Lüftungssysteme, da die nachträgliche Verlegung von Lüftungskanälen für zentralen Anlagen oft nur unter erheblichen Kosten möglich ist.

Sinnvollerweise werden bei einer dezentralen Lüftungseinheit die Lüftungs- und Heizungsfunktion in einem Gerät zusammengefasst. Ein Heizgerät der eingangs genannten Art ist aus der EP 0 942 237 A2 bekannt. Bei diesem Gerät wird kalte Zuluft von außen durch warme Abluft aus dem zu lüftenden Raum in einem Plattenwärmetauscher vorerwärmt, durch einen zentral beheizten Plattenheizkörper nacherwärmt und in den Raum geleitet. Das technisch und ökologisch sehr sinnvolle Produkt weist jedoch aus Sicht von Wohnungseigentümern und Abrechnungsgesellschaften einen Nachteil auf: Es kann nicht mit marktüblichen Heizkostenverteilern für die verbrauchsabhängige Heizkostenerfassung ausgerüstet werden.

Im Mietwohnungsbau müssen für die Heizkostenabrechnung die von den einzelnen Heizkörpern abgegebenen Wärmemengen erfasst werden. Dies geschieht entweder durch Heizkostenverteiler die direkt am Heizkörper montiert werden, oder einen Wärmezähler, der üblicherweise etagenweise die verbrauchte Wärmemenge anhand der zugeflossenen Heizwassermenge und der Zulauf- und Rücklauftemperaturen erfasst.

Ist eine Wohnung mit einem Wärmezähler ausgestattet, ist der Einsatz eines Heizgeräts gemäß der vorgenannten Offenlegungsschrift ohne weitere Maßnahmen möglich, da automatisch nur die dem Plattenheizkörper zugeflossene Wärmemenge erfasst wird. Eine geräteweise Ausstattung mit Wärmezählern ist aus abrechnungstechnischen Gründen sowie unter Kostengesichtspunkten nicht praktikabel.

Die wesentlich preiswerteren Heizkostenverteiler gemäß DIN EN 834 und 835 dürfen jedoch nicht für Heizkörper mit Gebläse und auch einige andere Heizsysteme wie Fußbodenheizungen oder Warmlufterzeuger eingesetzt werden.

Jeder Heizkostenverteiler muss durch einen Gesamtbewertungsfaktor K bewertet werden. Der Gesamtbewertungsfaktor K setzt sich aus drei Einzelbewertungsfaktoren zusammen. Davon ist der Bewertungsfaktor K_{Q} , der als der Zahlenwert der in Watt ausgedrückten Normleistung des Heizkörpers definiert ist, in jedem Fall anzuwenden. Eben dieser Faktor K_{Q} ist jedoch für ein Heizgerät gemäß der vorgenannten Offenlegungsschrift nicht bestimmbar. Diese Geräte besitzen nicht eine Normheizleistung sondern beliebig viele. Dafür gibt es zwei Gründe: Die Normheizleistung hängt zum einen von der Zulufttemperatur und zum anderen vom stufenlos regelbaren Luftvolumenstrom ab, mit dem der Radiator angeblasen wird. Aufgrund des nicht eindeutig definierbaren K_{Q} Wertes dürfen Heizkostenverteiler gemäß DIN EN 834 nicht für ein Heizgerät gemäß der vorgenannten Offenlegungsschrift und vergleichbare Geräte wie Gebläsekonvektoren verwendet werden.

Das der vorliegenden Erfindung zugrunde liegende Problem ist die Schaffung eines Verfahrens der eingangs genannten Art, das für in den Normen ausgenommene Heizsysteme einsetzbar ist. Weiterhin liegt der vorliegenden Erfindung das Problem zugrunde, einen Heizkostenverteiler der eingangs genannten Art zu schaffen, mit dem ein derartiges Verfahren durchführbar ist. Weiterhin liegt der vorliegenden Erfindung das Problem zugrunde, ein Heizgerät der eingangs genannten Art zu schaffen, das mit einem derartigen Heizkostenverteiler ausgerüstet ist.

Diese Probleme werden hinsichtlich des Verfahrens durch ein Verfahren der eingangs genannten Art mit den kennzeichnenden Merkmalen des Anspruchs 1, hinsichtlich des Heizkostenverteilers durch einen Heizkostenverteiler der eingangs genannten Art mit den kennzeichnenden Merkmalen des Anspruchs 5 und hinsichtlich des Heizgeräts durch ein Heizgerät der eingangs genannten Art mit den kennzeichnenden Merkmalen des Anspruchs 8 gelöst. Die abhängigen Ansprüche betreffen bevorzugte Ausgestaltungen der Erfindung.

Gemäß Anspruch 1 ist vorgesehen, dass der Betriebszustand zusätzlich durch das Messen der Temperatur der Zuluft zu dem Heizkörper bestimmt wird und dass der Bewertungsfaktor K_{Q} mit Hilfe eines hinterlegten Kennfeldes in Abhängigkeit von den gemessenen Parametern ermittelt wird. Dabei können als Kenngrößen für den Volumenstrom der Zuluft der Druck im Ansaug- und/oder Ausblaskanal, die Lüfterdrehzahl oder die Schalterstellung der Drehzahlsteuerung des Lüfters erfasst und ausgewertet werden. Es besteht die Möglichkeit, dass der Bewertungsfaktor K_{Q} vermittels eines elektronischen Heizkostenverteilers ermittelt wird. Dabei können bei der Ermittlung des Bewertungsfaktor K_{Q} mit Hilfe des hinterlegten Kennfeldes Interpolationen stattfinden.

Anspruch 5 sieht vor, dass Messelektronik für den Betriebszustand des Heizgerätes vorgesehen ist und dass in dem Heizkostenverteiler ein Kennfeld für die Bestimmung des Bewertungsfaktors K_{Q} hinterlegt ist. Es besteht dabei die Möglichkeit, dass die Messelektronik für den Betriebszustand in den Heizkostenverteiler integriert ist. Vorzugsweise ist der Heizkostenverteiler als elektronischer Heizkostenverteiler ausgebildet, wobei die Heizkostenverteilerelektronik in die Komplettelektronik des Heizgerätes integrierbar oder integriert ist.

Anspruch 8 sieht vor, dass das Heizgerät einen erfindungsgemäßen Heizkostenverteiler umfasst.

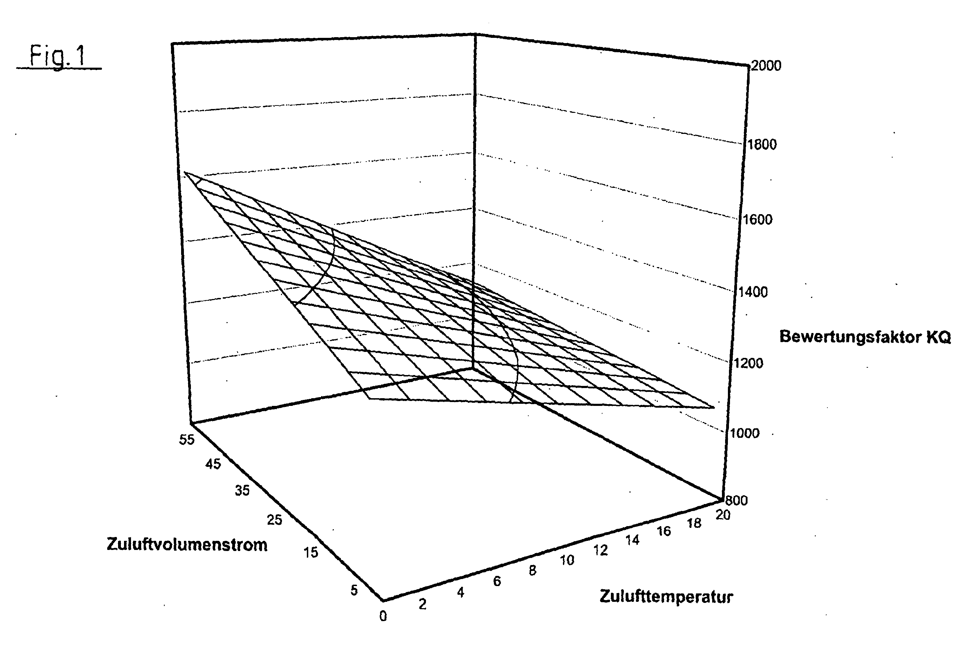

Weitere Merkmale und Vorteile der vorliegenden Erfindung werden deutlich anhand der nachfolgenden Beschreibung bevorzugter Ausführungsbeispiele unter Bezugnahme auf die beiliegende Abbildung. Darin zeigt
- Fig. 1: schematisch ein Kennfeld eines erfindungsgemäßen Heizkostenverteilers in willkürlichen Einheiten.

Um auch ein Heizgerät gemäß der vorgenannten Offenlegungsschrift oder vergleichbare Geräte mit einem Heizkostenverteiler ausstatten zu können, wird ein Heizkostenverteiler vorgeschlagen, der nicht wie heute üblich mit einem fixen K_{Q} - Wert arbeitet, sondern sich in Abhängigkeit des Betriebszustandes des Heizgerätes einen K_{Q} - Wert berechnet. Dieser berechnete Wert fließt dann in den Gesamtbewertungsfaktor K ein, der sich somit ebenfalls dem Betriebszustand des Gerätes anpasst.

Um K_{Q} in Abhängigkeit von dem Betriebszustand ermitteln zu können, sind im Betrieb die Temperatur der Zuluft und der Volumenstrom der Zuluft zu erfassen, mit der der Heizungsradiator angeblasen wird. In der Elektronik des Heizkostenverteilers ist ein beispielhaft aus Fig. 1 ersichtliches Kennfeld hinterlegt, aus dem der K_{Q} - Wert in Abhängigkeit von den gemessenen Parametern ermittelt wird.

Die Messelektronik ist vorteilhafterweise in den Heizkostenverteiler integriert. Als Kenngrößen für den Volumenstrom der Zuluft können beispielsweise der Druck im Ansaug- und/oder Ausblaskanal, die Lüfterdrehzahl oder die Schalterstellung der Drehzahlsteuerung des Lüfters erfasst und ausgewertet werden.

Das Kennfeld wird werksseitig experimentell ermittelt und ordnet verschiedenen Kombinationen von Zulufttemperatur und Zuluftvolumenstrom einen eindeutigen K_{Q} - Wert zu. Zwischenwerte sollten durch Interpolation ermittelbar sein.

K_{Q} fließt dann in die Ermittlung des Gesamtbewertungsfaktors K ein und der Heizkostenverteiler kann problemlos für die beschriebenen Heizungsgeräte eingesetzt werden. Seine Anzeigewerte sind vergleichbar mit denen von elektronischen Heizkostenverteilern, die an konventionellen Heizkörpern angebracht werden. So ist eine zuverlässige Verteilung der Heizkosten im Sinne der Heizkostenverordnung möglich.

## Patentansprüche

1. Verfahren zur Ermittlung eines der Normleistung eines Heizgerätes entsprechenden Bewertungsfaktors (K_{Q}), wobei das Heizgerät einen Heizkörper und ein Gebläse umfasst, wobei der Bewertungsfaktor (K_{Q}) in Abhängigkeit von dem Betriebszustand des Heizgerätes ermittelt wird, und wobei der Betriebszustand unter anderem durch das Messen des Volumenstroms der Zuluft zu dem Heizkörper bestimmt wird, **dadurch gekennzeichnet, dass** der Betriebszustand zusätzlich durch das Messen der Temperatur der Zuluft zu dem Heizkörper bestimmt wird und dass der Bewertungsfaktor (K_{Q}) mit Hilfe eines hinterlegten Kennfeldes in Abhängigkeit von den gemessenen Parametern ermittelt wird.

2. Verfahren nach Anspruch 1, **dadurch gekennzeichnet, dass** als Kenngrößen für den Volumenstrom der Zuluft der Druck im Ansaug- und/oder Ausblaskanal, die Lüfterdrehzahl oder die Schalterstellung der Drehzahlsteuerung des Lüfters erfasst und ausgewertet werden.

3. Verfahren nach einem der Ansprüche 1 oder 2, **dadurch gekennzeichnet, dass** der Bewertungsfaktor (K_{Q}) vermittels eines elektronischen Heizkostenverteilers ermittelt wird.

4. Verfahren nach einem der Ansprüche 1 bis 3, **dadurch gekennzeichnet, dass** bei der Ermittlung des Bewertungsfaktors (K_{Q})mit Hilfe des hinterlegten Kennfeldes Interpolationen stattfinden.

5. Heizkostenverteiler für die Durchführung eines Verfahrens nach einem der Ansprüche 1 bis 4, **dadurch gekennzeichnet, dass** Messelektronik für den Betriebszustand des Heizgerätes vorgesehen ist und dass in dem Heizkostenverteiler ein Kennfeld für die Ermittlung des Bewertungsfaktors (K_{Q}) hinterlegt ist.

6. Heizkostenverteiler nach Anspruch 5, **dadurch gekennzeichnet, dass** die Messelektronik für den Betriebszustand in den Heizkostenverteiler integriert ist.

7. Heizkostenverteiler nach einem der Ansprüche 5 oder 6, **dadurch gekennzeichnet, dass** der Heizkostenverteiler als elektronischer Heizkostenverteiler ausgebildet ist und die Heizkostenverteilerelektronik in die Komplettelektronik des Heizgerätes integrierbar oder integriert ist.

8. Heizgerät umfassend einen Heizkörper, einen Wärmetauscher und ein Gebläse, wobei mit dem Heizgerät kalte Zuluft durch warme Abluft in dem Wärmetauscher vorerwärmt, durch den Heizkörper nacherwärmt und in den Raum geleitet werden kann, **dadurch gekennzeichnet, dass** das Heizgerät einen Heizkostenverteiler nach einem der Ansprüche 5 bis 7 umfasst.

## Claims

1. Method for determining a weighting factor (K_{Q}) corresponding to the normalized power of a heating unit, the heating unit comprising a heater and a fan, the weighting factor (K_{Q}) being determined as a function of the operating state of the heating unit, and the operating state being found by, amongst other things, measuring the volume flow rate of the supply air to the heater, **characterized in that** the operating state is additionally found by measuring the temperature of the supply air to the heater, and **in that** the weighting factor (K_{Q}) is determined as a function of the measured parameters using a stored set of performance data.

2. Method according to Claim 1, **characterized in that** the pressure in the air-intake duct and/or air-outlet duct, the fan speed or the switch setting of the fan speed controller are detected and evaluated as characteristic data for the volume flow rate of the supply air.

3. Method according to Claim 1 or 2, **characterized in that** the weighting factor (K_{Q}) is determined by means of an electronic heat cost allocator.

4. Method according to any of Claims 1 to 3, **characterized in that** interpolations are carried out when determining the weighting factor (K_{Q}) using the stored set of performance data.

5. Heat cost allocator for implementing a method according to any of Claims 1 to 4, **characterized in that** electronic metering equipment for the operating state of the heating unit is provided, and **in that** a set of performance data for determining the weighting factor (K_{Q}) is saved in the heat cost allocator.

6. Heat cost allocator according to Claim 5, **characterized in that** the electronic metering equipment for the operating state is integrated in the heat cost allocator.

7. Heat cost allocator according to Claim 5 or 6, **characterized in that** the heat cost allocator is designed as an electronic heat cost allocator, and the heat cost allocator electronic circuitry can be, or is, integrated in the overall electronic circuitry of the heating unit.

8. Heating unit comprising a heater, a heat exchanger and a fan, where by means of the heating unit, cold supply air can be pre-heated by warm extracted air in the heat exchanger, heated further by the heater and directed into the room, **characterized in that** the heating unit comprises a heat cost allocator according to any of Claims 5 to 7.

## Revendications

1. Procédé pour déterminer un facteur de qualité (K_{Q}) correspondant à la puissance normalisée d'un appareil de chauffage, l'appareil de chauffage comprenant un corps de chauffe et une soufflerie, le facteur de qualité (K_{Q}) étant déterminé en fonction de l'état de fonctionnement de l'appareil de chauffage et l'état de fonctionnement étant déterminé entre autres en mesurant le débit volumique de l'air arrivant vers le corps de chauffe, **caractérisé en ce que** l'état de fonctionnement est déterminé en plus en mesurant la température de l'air arrivant vers le corps de chauffe et que le facteur de qualité (K_{Q}) est déterminé à l'aide d'un diagramme caractéristique mémorisé en fonction des paramètres mesurés.

2. Procédé selon la revendication 1, **caractérisé en ce que** les grandeurs caractéristiques acquises et interprétées pour le débit volumique de l'air arrivant sont la pression dans le conduit d'aspiration et/ou de soufflage, la vitesse de rotation du ventilateur ou la position du commutateur de la commande de vitesse de rotation du ventilateur.

3. Procédé selon l'une des revendications 1 ou 2, **caractérisé en ce que** le facteur de qualité (K_{Q}) est déterminé par l'intermédiaire d'un distributeur électronique de coût de chauffage.

4. Procédé selon l'une des revendications 1 à 3, **caractérisé en ce que** des interpolations ont lieu à l'aide du champ caractéristique mémorisé lors de la détermination du facteur de qualité (K_{Q}).

5. Distributeur de coût de chauffage pour la mise en oeuvre d'un procédé selon l'une des revendications 1 à 4, **caractérisé en ce qu'**il est prévu une électronique de mesure pour l'état de fonctionnement de l'appareil de chauffage et qu'un diagramme caractéristique est mémorisé dans le distributeur de coût de chauffage pour la détermination du facteur de qualité (K_{Q}).

6. Distributeur de coût de chauffage selon la revendication 5, **caractérisé en ce que** l'électronique de mesure pour l'état de fonctionnement est intégrée dans le distributeur de coût de chauffage.

7. Distributeur de coût de chauffage selon l'une des revendications 5 ou 6, **caractérisé en ce que** le distributeur de coût de chauffage est réalisé sous la forme d'un distributeur de coût de chauffage électronique et l'électronique du distributeur de coût de chauffage est intégrable ou intégrée dans l'électronique complète de l'appareil de chauffage.

8. Appareil de chauffage comprenant un corps de chauffe, un échangeur de chaleur et une soufflerie, l'appareil de chauffage permettant de préchauffer de l'air arrivant froid par l'air évacué chaud dans l'échangeur de chaleur, de le réchauffer par le corps de chauffe et de l'acheminer dans le local, **caractérisé en ce que** l'appareil de chauffage comprend un distributeur de coût de chauffage selon l'une des revendications 5 à 7.
